# EUROPEAN PATENT APPLICATION

(11) **EP 4 307 541 A1**
(43) Date of publication of application: **17.01.2024**
(21) Application number: 22382674.4
(22) Date of filing: 15.07.2022
(51) Int. Cl.: H02K 9/08, H02K 5/128

(54) **GENERATOR COOLING**

(71) Applicant: Siemens Gamesa Renewable Energy Innovation & Technology S.L., 31621 Sarriguren (Navarra) (ES)
(72) Inventor: Tomey Lopez, Estanislao Pablo, 31110 Noain (ES)
(74) Representative: SGRE-Association

(57) **Abstract**

A generator is provided, which comprises a stator (10) and a rotor (20). The stator (10) comprises stator windings (11) in which electrical current is induced during operation of the generator (100). The generator further comprises a pressure chamber (30), wherein the stator (10) is arranged inside the pressure chamber (30) and wherein the rotor (20) is arranged outside the pressure chamber (30). The pressure chamber (30) comprises a pressurized cooling medium (31) having a pressure that is higher than the pressure of a second medium (32) in which the rotor (20) is arranged.

## Description

### FIELD OF THE INVENTION

The present invention relates to a generator that comprises a stator and a rotor and to a generator assembly that comprises a respective generator and a gearbox. It further relates to a method of providing cooling for a generator.

### BACKGROUND

The power rating of wind turbines is increasing. Onshore wind turbine generators having an output power of for example more than 6 MW face problems related to logistics and transportation. The use of bigger and slower wind turbine rotors and the associated increase in power rating result in an increase of size and weight of the different components installed in the wind turbine (WT). On the other hand, levelized costs of electricity reduction (LCoE) and annual energy production (AEP) increase are drivers for new developments in the wind turbine industry. It is thus desirable to provide electrical generators having a high-power density, low volume and low weight and having a high efficiency.

Several concepts exist in the prior art to address this need. For example, the output speed of a gearbox has been increased to allow faster rotational speed of the generator, thus reducing generator size and weight. The document EP 3 248 275 B1 describes for example a variable performance electric generator in which efficiency is increased by adapting the operation of the cooling system to the sensed output power of the generator. Although several concepts exist, it is desirable to further increase the efficiency of the generator and decrease weight and size. A particular problem is the heat generation by the components of the generator and the need to remove the heat in order to ensure failsafe operation.

### Summary

Accordingly, there is a need to mitigate at least some of the drawbacks mentioned above and to provide an improved generator. There is in particular the need to improve the cooling of such generator.

This need is met by the features of the independent claims. The dependent claims describe embodiments of the invention.

According to an embodiment of the invention, a generator comprising a stator and a rotor is provided. The stator comprises stator windings in which electrical current is induced during operation of the generator. The generator further comprises a pressure chamber, wherein the stator is arranged inside the pressure chamber. The rotor is arranged outside the pressure chamber. The pressure chamber comprises a pressurized cooling medium having a pressure that is higher than the pressure of a second medium in which the rotor is arranged.

Several advantages may be achieved by such generator. By using pressurized cooling medium to cool the stator, the cooling performance of the generator may be improved. In particular, heat generated in the stator windings due to the induced current may be transported away more efficiently, in particular due to a higher heat capacity of the pressurized cooling medium and/or due to an increased convective heat transfer coefficient of the cooling medium. Further, by means of the pressure chamber and the pressurized medium, electrical insulation may be improved, and clearances may be reduced. Further, such generator may be more environmentally friendly, as the stator is not immersed in oil. Furthermore, the pressurized cooling medium, and thus the overpressure compared to environmental pressure, may prevent external air and pollution from entering the pressure chamber. The internal overpressure causes any potential leakage to occur towards the outside, thus preventing stator contamination. The stator may thus be protected from dust, debris, foreign particles, humidity and the like. The risk of winding insulation fault may also be reduced, and stator lifetime may be increased. Also, as the pressure chamber is provided around the stator of the generator, no rotating joints and seals are required in the pressure chamber. Rather, the pressure chamber can be static, e.g. without any rotational features. As no rotating joints may be present, friction losses may be reduced. As only static sealing may be employed, the sealing of the pressure chamber can be simplified and can occur cost efficiently, and the risk of leakage is reduced.

The stator may comprise stator windings and a stator core (i.e. magnetic package), which may be arranged in the pressure chamber.

In an embodiment, the pressure chamber is provided by a pressure vessel. The pressure vessel may for example have a toroidal shape. The pressure chamber may in particular be a stator can. Such toroidal shape may ensure that the stator is enclosed by the pressure chamber while the pressure chamber can retain a compact size.

The pressure chamber may include a chamber wall arranged between the stator and the rotor. Separation of the pressure chamber towards the rotor may thus be provided.

The chamber wall may comprise, or may be made of, at least one of an electrical insulator, a composite material, or a poor electrical conductor (in particular a non-metallic material). The chamber wall is preferably made out of a fiber composite material. Examples are a carbon fiber composite or a glass fiber composite material. Preferably, the chamber wall may be configured to exhibit a predefined (in particular a low) degree of conductivity. A carbon fiber composite may for example have an intrinsic conductivity due to the carbon fibers. A glass fiber composite may for example be coated with a conductive coating, such as a metal coating, e.g. an aluminum coating or the like. The respective conductivity may provide a potential equalization across the chamber wall. In particular, the chamber wall may be earthed, i.e. may be connected to ground (it may thus be put to a zero potential). Further, by a respective configuration of the chamber wall, the chamber wall may be kept thin, whereby the performance of the generator may be improved (e.g. due to a smaller gap between rotor and stator). The conductivity may eliminate capacitance (parasitic capacitance) in the rotor-stator gap.

The second medium in which the rotor is arranged may be at an environmental pressure. It may in particular be at atmospheric pressure. The second medium may for example be a gas, e.g. environmental air. Accordingly, it is not required to provide sealing for the second medium, but environmental air may flow around the rotor to cool the rotor. Complexity and size of the generator may thereby be reduced. In particular, no rotating joints and sealings may be required.

The rotor may be arranged inside a stator bore. The pressure chamber may have a respective bore in which the rotor is arranged (e.g. the bore of the toroidal pressure chamber). In other implementations, the rotor may be external to the stator and arranged around the stator.

In an embodiment, the rotor comprises permanent magnets. The generator may be a permanent magnet generator, in particular a permanent magnet synchronous generator (PMSG). The rotor and thus the permanent magnets may be cooled by the ambient air. Rotor losses of a permanent magnet rotor are generally low, so that efficient cooling can be achieved with ambient air. Further, since the stator is arranged in the pressure chamber, heated first cooling medium may not come into contact with the rotor, thereby improving the cooling efficiency of the rotor.

In embodiments of the generator disclosed herein, the permanent magnet temperature may in particular be lower than in conventional designs, so that reversible magnetization effects on the permanent magnets may be mitigated. Compared to a permanent magnet generator in which the stator and rotor share a cooling medium, the magnetic flux reduction that may be caused by a temperature increase of the permanent magnets may be reduced. As an example, for Neodymium Iron Boron magnets, the reversible temperature coefficient of remanence may be in the range of -0.08 to -0.12 %/K, depending on the grade. Lower permanent magnet temperatures thus result in smaller flux reduction, which is particularly beneficial at high load operation.

In an embodiment, the cooling medium inside the pressure chamber may have a pressure selected from the range of 0.5 to 20 barg, preferably from the range of 0.5 to 3 barg, more preferably from the range of 0.8 to 2.5 barg. Barg refers to the gauge pressure, i.e. the pressure above atmospheric pressure. The absolute pressure may for example lie between 1.5 and 21 bar, preferably 1.5 and 4 bar, more preferably between 1.8 and 3.5 bar. By using respective pressures, the thermal capacity of the cooling medium may be increased and the cooling of the stator may be improved. For example, the air density may increase with pressure (90% increase for 1 bar), thereby increasing the heat transfer at the same flow of the cooling medium. Furthermore, the convective heat transfer coefficient may also increase with pressure (for example 70% for 1 bar), which may further result in a reduction of the temperature of the active part, i.e. the stator, or which may allow the operation at a higher power while maintaining the same temperature of the active part. The heat transport away from the stator may thus be improved, leading to the possibility of constructing a more compact generator for the same power rating.

The cooling medium inside the pressure chamber may be a gas, and may in particular be air. Preferably, it may be dried air. Humidity may be removed from the air when filling or refilling the pressure chamber (using a dryer or de-humidifier, a filter, heat pump system or the like). Using air is environmental friendly, as the use of oil for cooling may be avoided and as escaping of the cooling medium from the pressure chamber is environmentally safe. The use of dried air may further improve the electrical insulation provided by the cooling medium and may avoid corrosion and thus increase the lifetime of the stator.

The generator may further comprise a pressure reservoir configured to store the cooling medium at an elevated pressure higher than an environmental pressure, and optionally at the same or at a higher pressure than the pressure in the pressure chamber. The pressure reservoir may be configured to release cooling medium into the pressure chamber (for example continuously, e.g. by being in flow communication with the pressure chamber, or in a controlled way). Additionally or alternatively, the generator may comprise at least one of a pump or compressor configured to provide pressurized cooling medium into the pressure chamber. By such pressure reservoir or pump/compressor, it may be ensured that the pressure within the pressure chamber is maintained relatively constant for prolonged periods of time, and may in particular be maintained above a (predefined) minimum pressure. Efficient cooling of the generator stator may thereby be ensured. The pressure reservoir may for example be in direct flow communication with the pressure chamber, so that the same pressure is present in both, or a valve, such as a controllable valve or a valve that opens upon a predefined differential pressure may be provided between the pressure reservoir and the pressure chamber.

In some embodiments, the generator may further comprise a pressure sensor to detect a pressure of the cooling medium inside the pressure chamber. A pressure drop or a leakage of the cooling medium may thus be detected. If the pressure drops, a service to refill the pressure chamber may for example be scheduled. In some embodiments, a signal from the pressure sensor may be used to control activation of a pump/compressor or a valve (e.g. coupled between a pressure reservoir and a pressure chamber) to cause cooling medium to flow into the pressure chamber. A control system may be provided to control the pump/compressor and/or valve based on the sensor signal (e.g. activate the respective element if the pressure drops below a threshold). The pressure inside the pressure chamber may thus automatically be maintained above a minimum pressure or at a desire pressure.

In the embodiment, the pressure of the cooling medium inside the pressure chamber may be automatically adjusted as a function of an operation power of the generator, e.g. as a function of output power or load. This adjustment may lead to an optimization of the cooling energy consumption and may thus reduce the temperature variation of the generator components. This in turn may reduce the thermal stresses due to the differential dilatation coefficients of the generator components and may increase the generator lifespan.

In an embodiment, the generator further comprises a cooling system configured to cool the first medium. In addition to cooling via the walls of the pressure chamber, the cooling medium may thus be cooled by such cooling system. More efficient cooling of the stator may thereby be achieved.

The cooling system may comprise a heat exchanger configured to exchange heat between the cooling medium and a further (third) medium. The further medium may also be a cooling medium, it may for example be a gas, ambient air, a cooling liquid, or the like. Use of a liquid as the further (third) medium may have the advantage of ensuring an efficient transport of heat away from the first cooling medium.

The heat exchanger may be arranged within the pressurized chamber, or may be connected by a flow connection to the pressurized chamber (i.e. it may be arranged outside the pressurized chamber). While the former configuration may provide a more compact design, the later configuration may further improve the cooling.

The cooling system may be an air-air cooling system or an air-liquid cooling system.

The pressurized cooling medium may for example be conveyed, e.g. by a fan or the like, through the heat exchanger arranged outside the pressure chamber, wherein the further (third) medium may be conveyed through or pass the heat exchanger, e.g. by a forced flow or by convection. In another example, the heat exchanger may be arranged inside the pressure chamber, and the further (third) medium may be a liquid or gas that is conveyed (e.g. by a fan, pump or the like) through the heat exchanger to remove heat from within the pressure chamber.

The heat exchanger may for example be integrated into an existing cooling system. For example an existing liquid cooling system, e.g. of a wind turbine, may be coupled to the heat exchanger. Cooling liquid or another cooling medium of such system may be conveyed through the heat exchanger to provide cooling of the pressurized cooling medium within the pressure chamber.

Accordingly, an efficient cooling of the stator and the rotor may be achieved. By such efficient cooling, the size of components may be reduced while maintaining the power rating. Furthermore, cost reduction may result.

The rotor of the generator may be configured to be mounted on an output shaft of a gearbox. The configuration may thus be made more compact. The rotor may in particular be configured to be supported by bearings of a stage of the gearbox that supports the output shaft (e.g. output stage). Thereby, the generator may not need to comprise a separate shaft and separate bearings for the rotor, which may make the generator even more compact and more cost efficient.

At least part of the pressure chamber may be configured to be mounted on a gearbox housing or gearbox frame of a gearbox that supplies a rotating input to the generator. In such configuration, as the frame or housing of the gearbox may be used to provide part of the pressure chamber, a compact and cost efficient design may be achieved. For example, at least part of a wall of the pressure chamber may be formed by the gearbox housing of a gearbox that supplies a rotating input to the generator. No separate housings for the gearbox and for the pressure chamber may thus need to be provided.

The generator may be wind turbine generator. It may in particular be configured to be mounted inside the nacelle of a wind turbine. Other implementations of the generator are also conceivable.

The generator may for example be a Permanent Magnet Synchronous Generator (PMSG) or an Electrically Excited Synchronous Generator (EExSG), which may include a brush or a brushless excitation unit.

According to a further embodiment of the invention, a generator assembly is provided that comprises a generator having any of the configurations described herein and a gearbox comprising a gearbox housing or frame, wherein the gearbox supplies a rotating input to the generator. At least part of the pressure chamber of the generator is mounted on the gearbox housing or gearbox frame, and/or at least part of a wall of the pressure chamber is formed by the gearbox housing or frame. Such assembly may provide a compact and cost-efficient combination of gearbox and generator, which may facilitate transportation and assembly. It may further be more cost efficient than conventional generator gearbox combinations.

The gearbox may comprise a rotating output shaft, and the rotating output shaft may (only) be supported by one, two or more bearings of an output stage of the gearbox. The rotor of the generator may be mounted on the rotating output shaft. By supporting the rotor on the output shaft of the gearbox, size and costs of the assembly may be reduced, in particular by not requiring additional bearings and an additional shaft for the rotor.

According to a further embodiment of the invention, a wind turbine comprising a generator or a generator assembly having any of the configurations described herein is provided. The generator or generator assembly may be arranged inside a nacelle of the wind turbine.

According to a further embodiment of the invention, a method of providing cooling for a generator is provided. The method comprises providing a pressure chamber and arranging a stator of the generator inside the pressure chamber. The stator comprises stator windings in which electrical current is induced during operation of the generator. The method further comprises arranging a rotor of the generator outside the pressure chamber and providing a pressurized cooling medium inside the pressure chamber at a pressure that is higher than the pressure of a second medium in which the rotor is arranged. By such method, advantages similar to the ones outlined further above with respect to the generator may be achieved. Such method may provide a cooling system for the generator, which may be more efficient.

The method may be performed so as to provide the generator having any of the configurations described herein. Further, the generator may be assembled by any of the methods described herein.

It is to be understood that the features mentioned above and those yet to be explained below can be used not only in the respective combinations indicated, but also in other combinations or in isolation, without leaving the scope of the present invention. In particular, the features of the different embodiments and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a generator and a generator assembly according to an embodiment.
Fig. 2 is a schematic drawing showing a generator and a generator assembly according to a further embodiment.
Fig. 3 is a schematic drawing showing details of a pressure chamber and cooling system that may be employed with the generator of figure 1 or 2.
Fig. 4 is a schematic drawing showing details of a pressure chamber and cooling system that may be employed with the generator of figure 1 or 2.
Fig. 5 is a flow diagram illustrating a method of providing cooling for a generator according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

In conventional generators, generator components are often cooled with ambient air, water (internal water circuit), or oil. Other types of generators use hydrogen cooling, wherein the stator and rotor may be comprised together inside a chamber filled with hydrogen. Although hydrogen is an excellent cooling fluid, such generators are inherently more complex, more expensive to build and more expensive to operate due to the need to prevent the mixing of hydrogen with air and to contain a potential hydrogen explosion within the generator. Embodiments disclosed herein provide a pressure chamber around the generator stator to cool the stator with pressurized cooling medium, such as pressurized gas, in particular pressurized air. The rotor on the other hand may be located outside the pressure chamber in ambient air. Thereby, efficient cooling is achieved while not requiring water, dirty and wet ambient air, oil or hydrogen for cooling. Further, rotating sealings are avoided.

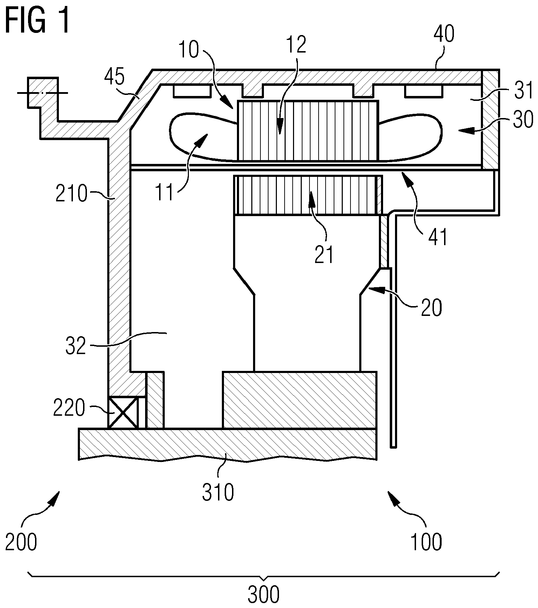

Fig. 1 illustrates an exemplary embodiment of a generator 100 that includes a stator 10 and a rotor 20. Due to the rotational symmetry, Fig. 1 shows only half of a sectional side view of the generator 100. The stator 10 includes the stator windings 11 and stator core 12. Rotor core 21 of the rotor 20 is visible in the sectional side view of Fig. 1. The rotor 20 may be electrically excited, but is preferably equipped with permanent magnets (not shown). Generator 100 may accordingly be an electrically excited synchronous generator, either brush or brushless type, or a permanent magnet synchronous generator. In the latter case, the magnets used in rotor 20 may be rare earth magnets, such as Neodymium Iron Boron magnets. The magnets may be low heavy rare earth content or green Neodymium Iron Boron magnets. With a suitable rotor magnetic circuit design, other permanent magnet materials may be used, such as Alnico, Ferrites or Samarium Cobalt magnets.

The stator 10 is provided in a pressure chamber 30. Pressure chamber 30 is filled with pressurized (first) cooling medium 31. Cooling medium 31 may be gas and in particular air. Preferably, cooling medium 31 is purified, for example by dehumidifying air before the air is pressurized and introduced into the pressure chamber 30. Pressure chamber 30 may be provided by a pressure vessel 40, which may have a toroidal shape and thus extend around the stator 10. Within the bore of stator 10 (and thus within the bore of toroidally shaped pressure vessel 40), the rotor 20 is arranged. In other configurations, rotor 20 may be arranged outside stator 10. By such toroidally shaped pressure vessel 40 that encloses the stator 10, a compact pressure chamber that only requires stationary sealing may be achieved. The pressure vessel 40 may also be termed stator can.

Rotor 20 is arranged outside the pressure chamber 30 and the pressure vessel 40. Rotor 20 is surrounded by a second medium 32, which acts as a cooling medium for the rotor 20. The second medium 32 is preferably air, in particular environmental air. Accordingly, it is not required to enclose the rotor 20 in a chamber, so that no respective rotating sealings are required.

A chamber wall 41 of the pressure chamber 30 may be arranged between the stator 10 and the rotor 20. It may have a thickness of a less than 20, less than 10, less than 5, or even less than 2 mm. By providing such thin chamber wall, the gap between stator 10 and rotor 20 may be kept small, thereby increasing the efficiency of the generator. Chamber wall 41 may be made of an electrically insulator or a poor conducting material. Preferably, a certain degree of conductivity is retained in order to ensure potential equalization across the chamber wall 41, and chamber wall 41 may be earthed (the generator may comprise a respective earth connection for chamber wall 41). Chamber wall 41 may for example be made of a carbon fiber composite material, a glass fiber composite material, or the like. Carbon fiber composite material generally has a low degree of conductivity. Glass fiber composite material may be coated with a layer of conductive material, such as a thin metal layer, e.g. a thin Aluminum layer. Parasitic capacitances, which may have a negative effect on the rotor voltages and rotor current fluxes, may thereby be reduced. A better performance of the generator may thus be achieved.

The remaining part of pressure vessel 400 may be made of a metallic material, e.g. steel, aluminum alloys, or grey cast iron. Chamber wall 41 may include metallic inserts to bond chamber wall 41 to the remaining part of pressure vessel 40, or an epoxy joining as conventionally employed for respective materials may be used.

The pressure of cooling medium 31 and pressure chamber 30 may be between 0.5 to 20 bar gauge, i.e. above atmospheric pressure. It may in particular be between 0.5 to 10 barg, or 0.5 to 3 barg. Preferably, a relatively low pressure of less than 2 barg (less than 200 kPa above atmospheric pressure) may be used. This allows the use of a relatively simple pressure vessel 40 and in particular of a relatively simple construction and a thin chamber wall 41 in the air gap between rotor and stator. Due to the static sealing, pressure losses are generally low, so that the pressure vessel 40 may be filled once with the pressurized cooling medium 31 and may only be checked and refilled at service intervals of the generator or wind turbine.

By using permanent magnets in rotor 20, no rotor winding losses and rotor joule losses may occur in rotor 20. Accordingly, the cooling requirements of rotor 20 are reduced significantly, so that cooling by the medium 32 may be sufficient.

By such generator configuration, a size and weight reduction may be achieved as well as an increase in efficiency, in particular due to the improved cooling of the stator.

Rotor 20 may be mounted on a shaft 310, which is an output shaft of a gearbox 200 in the example of Fig. 1. The shaft 310 may be supported by one or more bearings 220 of an output stage of the gearbox 200. Accordingly, no separate shaft and separate bearings may be required for rotor 20.

Gearbox 200 may include a housing or frame 210. A part 45 of pressure vessel 40 may be formed by the wall/frame 210 of the gearbox 200. The gearbox 200 may in particular include a gearbox frame with a protruding flange that provides the part 45. The toroidal pressure vessel 40 may be mounted on the flange of the gearbox frame, and the flange may accordingly form part of the pressure vessel 40 (it may in particular provide the part 45). Thereby, an even more compact and cost efficient configuration of the generator 100 may be achieved.

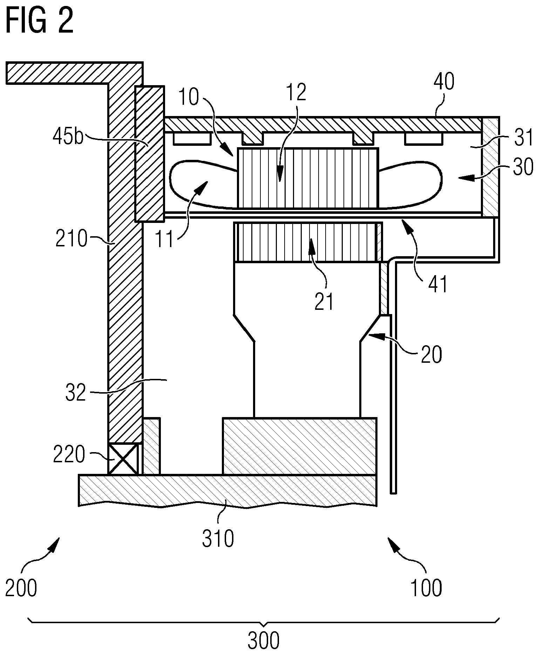

Fig. 2 illustrates an alternative configuration of the gearbox housing or frame 210. In the example of Fig. 2, the pressure vessel 40, e.g. the toroidal vessel, includes a flange 45b. Flange 45b may be configured to provide a wall of the pressure vessel 40 and to be mountable to the frame 210 of the gear box. The pressure vessel 40 itself may thus confine the pressure chamber 30 without the need to rely on a vessel wall being formed by the housing/frame 210. Such configuration may ease the disassembly of the generator independently of the gearbox. Otherwise, the configuration of the generator 100 and assembly 300 of Fig. 2 corresponds to the configuration of Fig. 1, so that the explanations given herein are equally applicable. In another embodiment, the flange 45b may not be present and the respective opening in the pressure vessel 40 may be closed by housing 210.

The generator 100 and the gearbox 200 may form a generator assembly 300. The stator 10 and the pressure vessel 40 may thus be supported by the flange of the gearbox frame, and the rotor 20 may be supported by the output shaft 310. Accordingly, no separate structure and housing for mounting the generator components may be needed. Gearbox 200 may thus essentially support the generator 100. Complexity, cost and size of generator 100 may thereby be reduced further. The flange of the gearbox frame in particular simplifies the formation of the pressure vessel 40 and the pressure chamber 30, thus providing the stator cooling in a cost efficient way.

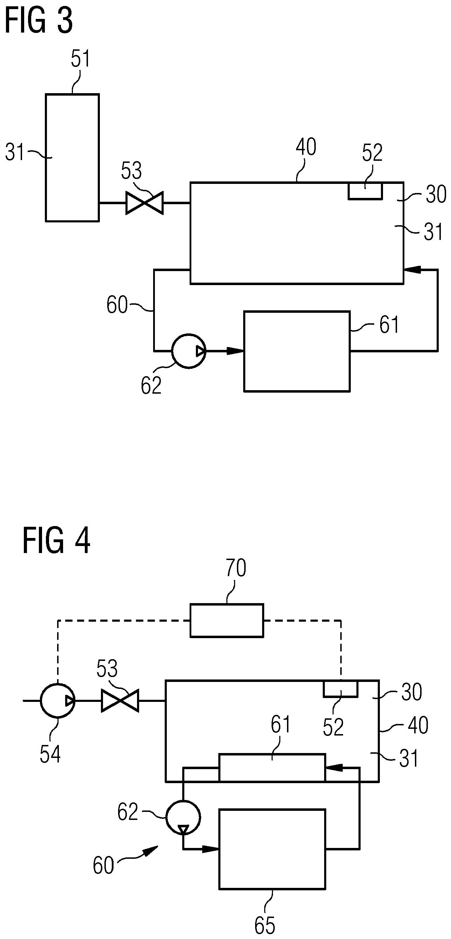

Figs. 3 and 4 illustrate particular beneficial modifications to the embodiment of Figs. 1 and 2 which may be employed in different combinations with these and other embodiments disclosed herein. As shown in Fig. 3, a pressure reservoir 51 may be coupled in flow connection with the pressure vessel 40. Pressure reservoir 51 may contain pressurized cooling medium 31. Several configurations are conceivable. Reservoir 51 may for example be in constant flow communication with the pressure chamber 30, and may for example comprise a membrane or bladder or the like that is pre-tensioned and maintains the pressure relatively constant. In another implementation, pressure reservoir 51 may comprise an overpressure compared to the pressure in pressure chamber 30, and a valve 53 may open if the pressure in pressure chamber 30 drops below a certain value. Respective differential pressure valves are known in the art and may be employed here. In another implementation, valve 53 may be actively controlled and may be opened if the pressure in chamber 30 drops below a threshold.

A pressure sensor 52 may be provided in pressure chamber 30. Pressure sensor 52 may be used to indicate a current pressure in pressure chamber 30, or to indicate if the pressure in pressure chamber 30 drops below a minimum pressure. Such information may be communicated to a service interface. In other implementations, a signal from sensor 52 may be used to control valve 53. In some embodiments, information may be provided by the pressure sensor to set the pressure of air in the pressure chamber 30 to a predetermined (optimum) value in dependence on a load operating point of the generator 100.

Further, the cooling medium 31 may be cooled by a cooling system 60, which may form part of generator 100 or of the assembly 300. In the example of Fig. 3, the cooling system 60 comprises a heat exchanger 61, and the cooling medium 31 may be conveyed through the heat exchanger 61. A blower, fan or pump 62, or other suitable device, may be employed for conveying the medium 31 through heat exchanger 61. By heat exchanger 61, heat may be transferred from cooling medium 31 to ambient air or to another cooling medium. In Fig. 3, the heat exchanger 61 is arranged outside the pressure chamber 30. An efficient cooling of the pressurized cooling medium 31 may thus be achieved, while retaining a compact configuration of pressure vessel 40.

In the exemplary implementation of Fig. 4, the cooling system 60 includes a heat exchanger 61 that is arranged within the pressure vessel 40. Another (third) cooling medium is conveyed through the heat exchanger 61 to take up heat from the pressurized cooling medium 31 in pressure vessel 40. The third cooling medium may for example be a liquid, and a hydraulic pump 62 may be used to convey the cooling medium through the heat exchanger 61. Unit 65 indicates another heat exchanger or another cooling system in which heat is removed from the third cooling medium. Unit 65 may for example be the cooling system of a wind turbine in which the generator 100 is installed, e.g. in a nacelle thereof, and the heat exchanger 61 may be connected to such cooling system. An efficient cooling of the pressurized cooling medium 31 may thus be achieved, while reducing the number of additional components required. Pump 62 may likewise form part of such existing cooling system, which may be provided in the nacelle. Such existing cooling system may also be used to cool the heat exchanger 61 in the system of Fig. 3.

It should be clear that the arrangement of the fan/pump 62, the heat exchanger 61, and the other components of cooling system 60 are only exemplary and illustrative, and they may be changed as desired to achieve the desired cooling effect.

In the exemplary implementation of Fig. 4, the reservoir 51 has further been replaced by a pump or compressor 54, which may be configured to pressurize cooling medium, preferably (de-humidified) ambient air to fill and/or refilled the pressure chamber 30 with pressurized cooling medium 31. Such pump 54 may be operated by service personal during a service, may be operated remotely, or may for example be operated on the basis of a pressure signal provided by pressure sensor 52, as exemplarily illustrated in Fig. 4. A respective control system 70 may for example receive the pressure signal and operate the pump 54 if the pressure has dropped below a threshold. The pressure in pressure chamber 30 may thus be restored to a predetermined pressure. Valve 53 is optional and may likewise be controlled manually or by control unit 70. The control unit may further be configured to adjust the pressure in pressure chamber 30 in dependence on a load operating point of generator 100.

It should be clear that these different systems, embodiments, and examples described with respect to Figs. 3 and 4 can be used in different combinations in the generator 100. The generator 100 may for example comprise the reservoir 51, and/or the pump 54, or none of both. Pressure sensor 52 may be provided without such reservoir or pump, or together with such reservoir or pump. Irrespective of whether a pump, a reservoir, or none of both is used, the generator 100 may comprise the cooling system 60 of Fig. 3 or of Fig. 4, or may not comprise such cooling system 60.

Figs. 3 and 4 only schematically illustrate the pressure vessel 40 and the above-described components related to the pressurization and cooling of the cooling medium 31. It should be clear that these components are integrated into the generator 100 that comprises the rotor and stator, wherein the stator is arranged inside the pressure vessel 40 and the rotor is arranged outside thereof, as exemplarily illustrated in Figs. 1 and 2.

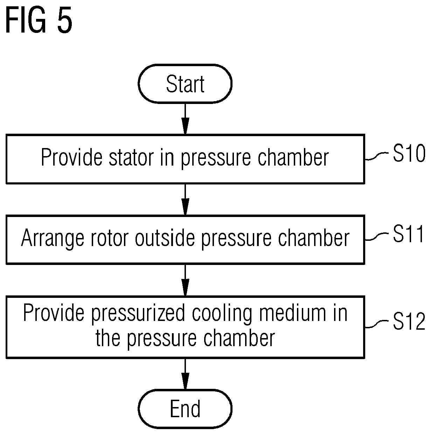

Fig. 5 describes an embodiment of a method of providing a respective cooling of a generator stator. In step S10, the stator is provided in the pressurized chamber 30, e.g. in the above described pressure vessel 40. In step S11, the rotor is arranged outside the pressurized chamber 30. In step S12, the pressurized cooling medium 31 is provided in the pressure chamber 30. Optionally, a cooling system 60 with a heat exchanger 61 may be provided, as the described with respect to Fig. 3 or Fig. 4. The cooling medium 31 may be pressurized by a pump 54 that may permanently or temporarily be connected to the pressure chamber 30. By such method, a generator may be provided that achieves the above described advantages.

The generator 100 as well as the generator assembly 300 may provide several benefits. The cooling performance of the generator may be improved, as well as the electrical insulation, so that air clearances can be reduced. Improving the cooling efficiency allows operation at higher powers at the same size or reduction of the generator size. Rotating joints and sealings, such as in conventional generators, may not be required. By not coming in contact with cooling medium heated by the stator, and optionally by using permanent magnets, the rotor may operate at a low temperature, thus making the reduction in flux due to rotor temperature smaller, in particular at high load operation. Thereby, the generator efficiency may further be improved. As outlined in detail above, several advantages may thus be achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A generator, comprising:
- a stator (10) and a rotor (20), wherein the stator (10) comprises stator windings (11) in which electrical current is induced during operation of the generator (100); and
- a pressure chamber (30), wherein the stator (10) is arranged inside the pressure chamber (30) and wherein the rotor (20) is arranged outside the pressure chamber (30) ,
wherein the pressure chamber (30) comprises a pressurized cooling medium (31) having a pressure that is higher than the pressure of a second medium (32) in which the rotor (20) is arranged.

2. The generator of claim 1, wherein the pressure chamber (30) is provided by a pressure vessel (40), wherein the pressure vessel has preferably a toroidal shape.

3. The generator according to claim 1 or 2, wherein the pressure chamber (30) includes a chamber wall (41) arranged between the stator (10) and the rotor (20).

4. The generator according to claim 3, wherein the chamber wall (41) comprises at least one of an electrical insulator, a composite material, or a poor electrical conductor, wherein the chamber wall (41) is preferably made out of a fiber composite material, such as a carbon fiber composite or a glass fiber composite material.

5. The generator according to any of the preceding claims, wherein the second medium (32) in which the rotor (20) is arranged is at environmental pressure, and is preferably environmental air.

6. The generator according to any of the preceding claims, wherein the rotor (20) comprises permanent magnets.

7. The generator according to any of the preceding claims, wherein the cooling medium (31) inside the pressure chamber (30) has a pressure selected from the range of 0.5 to 20 barg, preferably from the range of 0.5 to 3 barg, more preferably from the range of 0.8 to 2.5 barg.

8. The generator according to any of the preceding claims, wherein the cooling medium (31) inside the pressure chamber (30) is a gas, in particular air.

9. The generator according to any of the preceding claims, further comprising a pressure reservoir (51) configured to store the cooling medium (31) at elevated pressure higher than environmental pressure, whereon the pressure reservoir (51) is configured to release cooling medium into the pressure chamber (30), and/or further comprising a pump or compressor (54) configured to provide pressurized cooling medium (31) into the pressure chamber (30).

10. The generator according to any of the preceding claims, further comprising a pressure sensor (52) to detect a pressure of the cooling medium (31) inside the pressure chamber (30) .

11. The generator according to any of the preceding claims, further comprising a cooling system (60) configured to cool the cooling medium (31).

12. The generator according to claim 11, wherein the cooling system (60) comprises a heat exchanger (61) configured to exchange heat between the cooling medium (31) and a further medium.

13. The generator according to any of the preceding claims, wherein the rotor (20) of the generator (100) is configured to be mounted on an output shaft (310) of a gearbox (200) and is preferably configured to be supported by bearings (220) of an output stage of the gearbox (200) that support the output shaft (310).

14. A generator assembly comprising:
- a generator (100) according to any of the preceding claims; and
- a gearbox (200) comprising a gearbox housing or frame (210), wherein the gearbox (200) supplies a rotating input to the generator (100),
wherein at least part (45, 45b) of the pressure chamber (30) is mounted on the gearbox housing or gearbox frame (210), and/or wherein at least part of a wall (45) of the pressure chamber (40) is formed by the gearbox housing or frame (210).

15. A method of providing cooling for a generator (100), comprising:
- providing a pressure chamber (30) and arranging a stator (10) of the generator inside the pressure chamber (30), wherein the stator (10) comprises stator windings (11) in which electrical current is induced during operation of the generator (100);
- arranging a rotor (20) of the generator outside the pressure chamber (30); and
- providing a pressurized cooling medium (31) inside the pressure chamber (30) at a pressure that is higher than the pressure of a second medium (32) in which the rotor (20) is arranged.
